(19) Europäisches Patentamt / European Patent Office / Office européen des brevets

(11) **EP 4 455 087 A1**

(12) **EUROPEAN PATENT APPLICATION**
published in accordance with Art. 153(4) EPC

(43) Date of publication:
**30.10.2024 Bulletin 2024/44**

(21) Application number: **22911726.2**

(22) Date of filing: **12.12.2022**

(51) International Patent Classification (IPC):
*C01B 32/174* (2017.01)    *C01B 32/159* (2017.01)
*H01M 4/62* (2006.01)

(52) Cooperative Patent Classification (CPC):
**C01B 32/159; C01B 32/174; H01M 4/62;**
Y02E 60/10

(86) International application number:
**PCT/KR2022/020101**

(87) International publication number:
**WO 2023/121093 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 KR 20210185214
09.12.2022 KR 20220171427**

(71) Applicant: **Betterial Co., Ltd.
Seongnam-si, Gyeonggi-do 13210 (KR)**

(72) Inventors:
• **KIM, Taek Gyoung
Seoul 07636 (KR)**
• **YOO, Kwang Hyun
Seoul 05698 (KR)**
• **KANG, Seong Kyun
Gimpo-si Gyeonggi-do 10068 (KR)**

(74) Representative: **Ter Meer Steinmeister & Partner
Patentanwälte mbB
Nymphenburger Straße 4
80335 München (DE)**

(54) **CARBON NANOTUBE DISPERSION LIQUID, METHOD FOR PREPARING SAME, ELECTRODE SLURRY COMPOSITION COMPRISING SAME, ELECTRODE COMPRISING SAME, AND LITHIUM SECONDARY BATTERY COMPRISING SAME**

(57)    The present specification provides: a carbon nanotube dispersion liquid comprising single-walled carbon nanotubes (SWCNTs) having the purity of 95% or more and a cellulose-based dispersant, wherein the cellulose-based dispersant has the value of 7 or more and 13 or less calculated by mathematical formula 1; a method for preparing same; an electrode slurry composition comprising same; an electrode comprising same; and a lithium secondary battery comprising same.

EP 4 455 087 A1

## Description

## Technical Field

The present specification claims priority to Korean Patent Application No. 10-2021-0185214, filed December 22, 2021, and Korean Patent Application No. 10-2022-0171427, filed December 9, 2022, the entire contents of which are incorporated herein for all purposes by this reference.

The present specification relates to a carbon nanotube dispersion liquid, a method of preparing the same, an electrode slurry composition including the same, an electrode including the same, and a lithium secondary battery including the same.

## Background Art

Secondary batteries are types of batteries capable of being repeatedly used through discharging processes in which chemical energy is converted to electrical energy and charging processes, that is, the reverse of the discharging processes. A secondary battery is composed of a positive electrode, a negative electrode, an electrolyte, and a separator. Each of the positive and negative electrodes typically includes an electrode current collector and an electrode active material layer formed on the electrode current collector. The electrode active material layer is formed in such a manner that an electrode slurry composition containing an electrode active material, a conductive additive, a binder, and the like is applied on an electrode current collector, dried, and then rolled.

In the related art, point-type conductive additives such as carbon black have been mainly used as conductive additives to improve the conductivity of electrode active materials. However, point-type conductive additives are insignificantly effective in improving electrical conductivity, so excessive amounts thereof thus must be used to obtain sufficient effects. As a result, there is a problem that the amount of electrode active materials included decreases, leading to a decrease in battery capacity.

To solve such problems, attempts to apply highly conductive carbon nanotubes (CNTs) as conductive additives have been actively made. Carbon nanotubes can achieve high conductivity even in small amounts. For this reason, using carbon nanotubes is advantageous in significantly reducing the amount of conductive additives included compared to using carbon black, which may lead to an increase in electric capacity.

On the other hand, with a demand for high-capacity materials to overcome the limitations of graphite (low theoretical capacity), silicon-based negative electrode materials are in the limelight. However, when silicon reacts with lithium, volume expansion at a level of about 100% to 400% results in not only a large initial irreversible capacity but also the collapse of an active material structure and detachment from a current collector during charging and discharging, leading to loss of electrical contact. As a result, the lifespan characteristics of an electrode deteriorate.

Therefore, there is an urgent need to introduce linear carbon nanotubes (single-walled or multi-walled carbon nanotubes) so that the volume expansion of silicon is buffered, and electrical contact is maintained.

However, due to the nature of the material itself, which grows in a bundle type or entangle type, carbon nanotubes have poor dispersibility in a slurry, leading to deterioration in coating properties and processability, and are not evenly distributed in an electrode active material layer, which is problematic. To solve these problems, a method of first mixing carbon nanotubes with a dispersant and a solvent to prepare a carbon nanotube dispersion liquid and then applying the carbon nanotube dispersion liquid to an electrode slurry composition is being used.

Additionally, battery efficiency may be affected depending on the types of dispersants, purity of SWCNTs, degree of water dispersion, and the like.

[Document of related art]

[Patent Document]

JP 2010-251293 A

## Disclosure

## Technical Problem

Proposed are a carbon nanotube dispersion liquid having improved dispersion stability, a method of preparing the same, an electrode slurry composition including the same, an electrode including the same, and a lithium secondary battery including the same.

**Technical Solution**

A first embodiment of the present disclosure provides a carbon nanotube dispersion liquid including single-walled carbon nanotubes (SWCNTs) having a purity of 95% or more and

a cellulose-based dispersant,
wherein the cellulose-based dispersant has a value of 7 or more and 13 or less calculated by Mathematical Formula 1.

Degree of substitution (DS) of cellulose-based dispersant/(weight average molecular weight of cellulose-based dispersant) * $10^6$

Additionally, a second embodiment of the present disclosure provides a method of preparing the carbon nanotube dispersion liquid described above, the method including mixing single-walled carbon nanotubes (SWCNTs) having a purity of 95% or more and a cellulose-based dispersant.
Additionally, a third embodiment of the present disclosure provides an electrode slurry composition including the carbon nanotube dispersion liquid described above, a silicon-based electrode active material, and a binder.
Additionally, a fourth embodiment of the present disclosure provides an electrode including an electrode active material layer formed by the electrode slurry composition described above.
Additionally, a fifth embodiment of the present disclosure provides a lithium secondary battery including the electrode described above.

**Advantageous Effects**

A carbon nanotube dispersion liquid, according to one embodiment of the present disclosure, can improve dispersion stability.

**Best Mode**

Hereinafter, the present disclosure will be described in detail.
As used herein, "carbon nanotube dispersion liquid" refers to a dispersion liquid containing carbon nanotubes, specifically meaning that carbon nanotubes are dispersed in the dispersion liquid and do not aggregate with each other.
As used herein, "carbon nanotube" refers to "single-walled carbon nanotube", unless otherwise specified.
As used herein, single-walled carbon nanotubes refer to carbon nanotubes in which the number of bonds forming the wall is 1.
As used herein, the carbon nanotubes may have a two-dimensional structure in which a plurality of carbon nanotubes is aggregated or arranged, which may be, for example, bundle-type carbon nanotubes, in which a plurality of carbon nanotubes is arranged or aligned side by side in a uniform direction in a bundle-like or rope-like shape, or entangled-type carbon nanotubes, in which a plurality of carbon nanotubes is tangled without a uniform direction in a spherical or potato shape.
A first embodiment of the present disclosure provides a carbon nanotube dispersion liquid including single-walled carbon nanotubes (SWCNTs) having a purity of 95% or more and

a cellulose-based dispersant,
wherein the cellulose-based dispersant has a value of 7 or more and 13 or less calculated by Mathematical Formula 1.

Degree of substitution (DS) of cellulose-based dispersant/ (weight average molecular weight of cellulose- based dispersant) * $10^6$          [Mathematical Formula 1]

The carbon nanotube dispersion liquid, according to the embodiment of the present disclosure, is characterized in that despite containing the single-walled carbon nanotubes having excellent conductivity, the dispersibility of the carbon nanotubes is improved, thereby minimizing the interaction between the carbon nanotubes. Such characteristics may be verifiable by the significantly low viscosity of the dispersion liquid.
The carbon nanotube dispersion liquid, according to the embodiment of the present disclosure, contains the cellulose-based dispersant. The cellulose-based dispersant is characterized by having high dispersibility and lithium-ion conductivity. In other words, a high-performance lithium-ion battery may be manufactured when manufacturing a lithium-ion battery using the carbon nanotube dispersion liquid containing the cellulose-based dispersant.

In the embodiment of the present disclosure, the cellulose-based dispersant is characterized in that the value calculated by Mathematical Formula 1 is 7 or more and 13 or less. Preferably, the value calculated by Mathematical Formula 1 is 8 or more and 10 or less, or 9 or more and 11 or less. When the above numerical range is satisfied, there may be the following advantages in improving the structural stability of the dispersant, improving the dispersibility of the dispersion liquid, stabilizing the viscosity of the dispersion liquid, and evenly distributing the carbon nanotubes contained in the dispersion liquid. The application of such a dispersion liquid characterized as described above to a battery is effective in improving the efficiency and capacity of the battery.

In the embodiment of the present disclosure, the degree of substitution of the cellulose-based dispersant may be 0.3 or more and 2 or less and, preferably, is 0.5 or more and 1.2 or less, or 0.7 or more and 1 or less. When the above numerical range is satisfied, the solubility of the dispersant in the dispersion liquid is excellent, and the dispersibility of the carbon nanotubes may be improved.

In the embodiment of the present disclosure, the degree of substitution of the cellulose-based dispersant refers to the average number of substituent groups substituted for cellulose per cellulose repeat unit. In this case, the substituent group may be a methyl group, an ethyl group, a hydroxy group, a benzyl group, a trityl group, a cyano group, a carboxymethyl group, a carboxyethyl group, a hydroxyethyl group, an aminoethyl group, a nitro group, and the like.

In the embodiment of the present disclosure, the cellulose-based dispersant may have a weight average molecular weight in a range of 30,000 to 1,000,000, which is preferably in the range of 50,000 to 800,000 or 60,000 to 200,000. When the above numerical range is satisfied, the solubility of the dispersant in the dispersion liquid is excellent. Additionally, there may be the following advantages in improving the dispersibility of the carbon nanotubes and the dispersion stability. The unit of the weight average molecular weight may be g/mol.

In the embodiment of the present disclosure, the cellulose-based dispersant may be methyl cellulose, ethyl cellulose, hydroxyethyl cellulose, benzyl cellulose, trityl cellulose, cyanoethyl cellulose, carboxymethyl cellulose (CMC), carboxyethyl cellulose, aminoethyl cellulose, nitrocellulose, cellulose ether, a carboxymethyl cellulose sodium (CMCNa) salt, or a combination thereof.

In the embodiment of the present disclosure, the cellulose-based dispersant may be carboxymethyl cellulose (CMC), a carboxymethyl cellulose sodium (CMCNa) salt, or a combination thereof. These materials have good solubility in water, high viscosity, and excellent coating properties. When the dispersion liquid containing such a material described above is applied to a battery, battery performance may be improved.

In the embodiment of the present disclosure, the single-walled carbon nanotubes may have a specific surface area (BET) of 750 $m^2/g$ or larger. Preferably, the specific surface area is 900 $m^2/g$ or larger, or 1,000 $m^2/g$ or larger. The upper limit is not particularly limited but may be 2,000 $m^2/g$ or smaller, 1,800 $m^2/g$ or smaller, or 1,500 $m^2/g$ or smaller. Within the above numerical range, the aggregation of the single-walled carbon nanotubes may be controlled, and electrical conductivity may be improved.

In the embodiment of the present disclosure, the carbon nanotube dispersion liquid contains the single-walled carbon nanotubes (SWCNTs) having a purity of 95% or more.

In the embodiment of the present disclosure, the single-walled carbon nanotubes (SWCNTs) may have a purity of 96% or more, or 97% or more, which is preferably 99% or more. The purity may refer to the weight ratio of a carbon element (C) to the mass of the carbon nanotubes. When the above numerical range is satisfied, the electrical conductivity of the carbon nanotubes is improved.

In the embodiment of the present disclosure, the single-walled carbon nanotubes may be contained in an amount in a range of 0.1 to 5 wt% based on the total weight of the carbon nanotube dispersion liquid. Additionally, the amount thereof contained may be in a range of 0.4 to 4 wt% or 1 to 2 wt%. When the amount thereof contained exceeds the above numerical range, the loading amount is reduced when manufacturing an electrode, resulting in an increase in process costs. Additionally, there may be a problem of binder migration when drying an electrode, leading to a decrease in adhesive strength, an increase in the viscosity of the carbon nanotube dispersion liquid, or the like. In other words, when the above numerical range is satisfied, the high-rate retention capacity and initial efficiency of an electrode to be manufactured may be improved.

In the embodiment of the present disclosure, the single-walled carbon nanotubes may include two or more carbon nanotube monomers. The carbon nanotube monomers may have a cylindrical form in which a graphite sheet has a nano-sized diameter while having a $sp^2$-bonded structure.

In the embodiment of the present disclosure, the carbon nanotube monomers may have a diameter of 1 nm or larger and 200 nm or smaller, 1 nm or larger and 150 nm or smaller, or 1 nm or larger and 100 nm or smaller. Within the above numerical range, the dispersibility of the carbon nanotubes may be improved, and resistance may be prevented from increasing when applied to an electrode.

In the embodiment of the present disclosure, the carbon nanotube monomers may have a length in a range of 0.1 um or greater and 200 um or smaller, 0.1 um or greater and 150 um or smaller, or 0.5 um or greater and 100 um or smaller. Within the above numerical range, the dispersibility of the carbon nanotubes may be improved, and resistance may be prevented from increasing when applied to an electrode.

In the embodiment of the present disclosure, the carbon nanotubes may have an aspect ratio (length/diameter) in a range of 5 to 50,000 or 10 to 15,000. Within the above numerical range, the dispersibility of the carbon nanotubes may be improved, and resistance may be prevented from increasing when applied to an electrode.

In the embodiment of the present disclosure, the carbon nanotubes may have a median particle size (D50) in a range of 0.1 to 10 um, 0.5 to 1 um, 1 to 5 um, or 2 to 4 um. The median particle size (D50) refers to a particle size corresponding to 50% of the cumulative number in the particle size distribution curve of the carbon nanotubes. The median particle size (D50) may be measured, for example, using a laser diffraction method. Within the above numerical range, the carbon nanotubes may not aggregate with each other while improving dispersibility. In the embodiment of the present disclosure, the carbon nanotubes may have a specific surface area (BET) in a range of 10 to 5,000 $m^2/g$, which is preferably in the range of 30 to 3,000 $m^2/g$ and more preferably in the range of 500 to 2,000 $m^2/g$. When the specific surface area of the carbon nanotubes satisfies the above numerical range, the effect of improving conductivity is excellent.

In the embodiment of the present disclosure, the single-walled carbon nanotubes may have an average particle size (D10) of 0.1 um or larger and 10 um or smaller, which is preferably 0.3 um or larger and 8 um or smaller, or 0.5 um or larger and 5 um or smaller.

In the embodiment of the present disclosure, the single-walled carbon nanotubes may have an average particle size (D90) of 0.1 um or larger and 20 um or smaller, which is preferably 1 um or larger and 20 um or smaller, or 5 um or larger and 20 um or smaller.

In the particle size distribution curve of the carbon nanotubes, the average particle size (D10) refers to a particle size corresponding to 10% of the cumulative number, the median particle size (D50) refers to a particle size corresponding to 50% of the cumulative number, and the average particle size (D90) refers to a particle size corresponding to 90% of the cumulative number.

When one or more of the average particle size conditions described above are satisfied, the carbon nanotubes may not aggregate with each other while improving dispersibility.

In the embodiment of the present disclosure, the carbon nanotube dispersion liquid may further contain multi-walled carbon nanotubes in addition to the single-walled carbon nanotubes described above.

In the embodiment of the present disclosure, an aqueous solvent may be included.

In the embodiment of the present disclosure, one or more selected from the group consisting of water, alcohol, and ether may be used as the aqueous solvent.

In the embodiment of the present disclosure, the aqueous solvent used may be ethers (such as dioxane, tetrahydrofuran, and methyl cellosolve), ether alcohols (such as ethoxy ethanol and methoxy ethoxy ethanol), esters (such as methyl acetate and ethyl acetate), ketones (such as cyclohexanone and methyl ethyl ketone), alcohols (such as ethanol, isopropanol, and phenol), lower carboxylic acids (such as acetic acid), amines (such as triethylamine and new methanol amine), nitrogen-containing polar solvents (such as N,N-dimethylformamide, nitromethane, N-methylpyrrolidone, and acetonitrile), sulfur compounds (such as dimethyl sulfoxide), and the like.

In the embodiment of the present disclosure, the carbon nanotube dispersion liquid may have a viscosity of 10,000 cPs or less at a temperature of 25°C and a shear rate of 15 sec$^{-1}$, which is preferably 5,000 cPs or less, 3,000 cPs or less, or 2,000 cPs or less. Considering the purpose of the present disclosure, the lower the viscosity, the more it is beneficial. Thus, the lower limit is not particularly limited, but the viscosity may be 10 cPs or more, 30 cPs or more, or 50 cPs or more. When the above numerical range of the viscosity is satisfied, the carbon nanotubes in the carbon nanotube dispersion liquid may not aggregate with each other, whereby processability thereof may be improved when used to manufacture an electrode.

The viscosity of the carbon nanotube dispersion liquid may be measured by methods commonly used in the field to which this technology pertains. For example, the measurement may be performed using a DVNext CP rheometer manufactured by Brookfield at a measurement temperature of 25°C and a shear rate of 15 sec$^{-1}$. To further accurately measure the viscosity, the measurement may be performed after storing the prepared carbon nanotube dispersion liquid for one week at a temperature of 25°C.

A second embodiment of the present disclosure provides a method of preparing the carbon nanotube dispersion liquid described above, the method including a step of mixing single-walled carbon nanotubes (SWCNTs) having a purity of 95% or more and a cellulose-based dispersant.

In the embodiment of the present disclosure, the mixing step of the single-walled carbon nanotubes (SWCNTs) having a purity of 95% or more and the cellulose-based dispersant may be performed under a temperature condition where the physical properties do not change. For example, this step may be performed at a temperature of 50°C or lower and, more specifically, at a temperature in the range of 5°C to 50°C.

In the embodiment of the present disclosure, the method of preparing the carbon nanotube dispersion liquid may include a step of dispersing the single-walled carbon nanotubes (SWCNTs) having a purity of 95% or more.

In the embodiment of the present disclosure, the dispersing step of the single-walled carbon nanotubes (SWCNTs) having a purity of 95% or more may be performed by methods using a ball mill, a bead mill, a disc mill, a basket mill, a high-pressure homogenizer, or the like and, more specifically, may be performed by milling methods using a disc mill or a high-pressure homogenizer.

During milling using the disc mill, the size of beads may be appropriately determined depending on the type and amount of carbon nanotubes and the type of dispersant. Specifically, the diameter of the beads may be in a range of 0.1 to 5 mm and, more specifically, in the range of 0.5 to 4 mm. Additionally, this bead milling process may be performed at a speed in a range of 2,000 to 10,000 rpm, which may be more specifically in the range of 5,000 to 9,000 rpm.

Milling using the high-pressure homogenizer, for example, is performed by forces such as cavitation, shear, impact, and explosion when allowed to pass through the gap by compressing the resulting mixture with a plunger pump of the high-pressure homogenizer and pushing the same through the gap of the homogenization valve.

In the embodiment of the present disclosure, the dispersing step of the single-walled carbon nanotubes (SWCNTs) having a purity of 95% or more may be performed for 10 to 120 minutes and, more specifically, for 20 to 90 minutes so that the carbon nanotubes are sufficiently dispersed.

A third embodiment of the present disclosure provides an electrode slurry composition including the carbon nanotube dispersion liquid described above, an electrode active material, and a binder.

In the embodiment of the present disclosure, the electrode active material includes a silicon-based electrode active material. The silicon-based electrode active material may include one or more types selected from the group consisting of metal silicon (Si), a silicon oxide (SiOx, where $0 < x < 2$), silicon carbide (SiC), and a Si-Y alloy (where Y is an element selected from the group consisting of an alkali metal, an alkaline earth metal, an element of group 13, an element of group 14, a transition metal, a rare-earth element, and a combination thereof, but not Si). The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

In the embodiment of the present disclosure, the silicon-based electrode active material exhibits higher capacity characteristics than carbon-based electrode active materials. Therefore, when the silicon-based electrode active material is additionally included, further excellent capacity characteristics may be obtained. Still, the volume of the silicon-based electrode active material greatly changes during charging and discharging. For this reason, when being repeatedly charged and discharged, battery characteristics rapidly deteriorate, so cycle characteristics are insufficient, making the silicon-based electrode active material challenging to commercialize. However, in the case of using carbon nanotubes as a conductive additive, as in the present disclosure, cycle characteristics may be improved when applying the silicon-based electrode active material. As a result, when using the electrode slurry composition of the present disclosure, including the carbon nanotube dispersion liquid of the present disclosure and the silicon-based electrode active material, a secondary battery having excellent capacity characteristics and cycle characteristics may be implemented.

In the embodiment of the present disclosure, the electrode active material may further include other types of electrode active materials along with the silicon-based electrode active material. Examples of the other types of electrode active materials used may include: carbonaceous materials, such as artificial graphite, natural graphite, graphitized carbon fibers, and amorphous carbon; metallic compounds capable of forming an alloy with lithium, such as Al, Sn, Pb, Zn, Bi, In, Mg, Ga, Cd, Si alloys, Sn alloys, or Al alloys; metal oxides capable of doping and undoping lithium, such as SnO2, vanadium oxide, and lithium vanadium oxide; composites containing the metallic compound and the carbonaceous material described above, such as Sn-C composites; or the like. Among these materials, carbonaceous materials are particularly preferable.

In the embodiment of the present disclosure, the total amount of the electrode active material, which is a combination of the silicon-based electrode active material and the other types of electrode active materials, may be in a range of 70 to 99 wt% and is preferably in the range of 80 to 98 wt%, based on the total amount of solid content in the electrode slurry composition. When the amount of the electrode active material included satisfies the above numerical range, excellent capacity characteristics may be achieved.

In the embodiment of the present disclosure, as the binder configured to obtain adhesive strength between the active materials or between the active material and a current collector, any binders commonly used in the field to which this technology pertains may be usable, and the types thereof are not particularly limited. Examples of the binder used may include polyvinylidene fluoride (PVDF), vinylidene fluoride-hexafluoropropylene copolymers (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymers (EPDMs), sulfonated-EPDMs, styrene-butadiene rubber (SBR), fluorine rubber, or various copolymers thereof. Among these examples, a single type or a mixture of two or more types may be used.

In the embodiment of the present disclosure, the binder may be included in an amount of 5 wt% or less based on the total amount of the solid content, which is preferably in the range of 1 to 3 wt%. When the amount of the binder included satisfies the above numerical range, excellent adhesive strength to electrodes may be achieved while minimizing an increase in electrode resistance.

In the embodiment of the present disclosure, the electrode slurry composition may further contain a solvent, if necessary, to adjust the viscosity and the like. In this case, the solvent may be water, an organic solvent, or a mixture thereof. Examples of the organic solvent may include: amide-based polar organic solvents, such as dimethylformamide (DMF), diethylformamide, dimethylacetamide (DMAc), and N-methylpyrrolidone (NMP); alcohols, such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols, such as ethylene glycol, diethylene glycol, triethylene glycol, propylene glycol, 1,3-propanediol, 1,3-butanediol, 1,5-pentanediol, or hexylene glycol; polyhydric alcohols, such as glycerin, trimethylolpropane, pentaerythritol, or sorbitol; glycol ethers, such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones, such as acetone, methyl ethyl ketone, methyl propyl ketone, or cyclopentanone; esters such as ethyl acetate, $\gamma$-butyl lactone, and $\varepsilon$-propiolactone; and the like. Among these examples, a single type or a mixture of two or more types may be used, but the organic solvent is not limited thereto.

In the embodiment of the present disclosure, the electrode slurry composition may further contain additives such as a viscosity modifier and a filler, if necessary.

A fourth embodiment of the present disclosure provides an electrode including an electrode active material layer formed by the electrode slurry composition described above. Specifically, the electrode may be manufactured by applying the electrode slurry composition of the present disclosure described above and then drying the resulting product to form the electrode active material layer. More specifically, the electrode active material layer may be formed by a method of applying the electrode slurry composition on an electrode current collector and then drying the resulting product, or by a method of applying the electrode slurry composition on a separate support and then laminating a film obtainable by being detached from the support, on the electrode current collector. If necessary, the electrode active material layer may be formed in such a manner and then subjected to an additional rolling process. In this case, the drying and rolling processes may be performed under appropriate conditions considering the physical properties of an electrode to be ultimately manufactured, but are not particularly limited.

In the embodiment of the present disclosure, the electrode current collector is not particularly limited as long as it is made of a conductive material that does not cause chemical changes in batteries. Examples thereof used may include copper, stainless steel, aluminum, nickel, titanium, and alloys thereof, these metals whose surface is treated with carbon, nickel, titanium, silver, and the like, or sintered carbon.

In the embodiment of the present disclosure, the electrode current collector may typically have a thickness in a range of 3 to 500 um. Additionally, the bonding strength of the electrode active material may be strengthened by forming fine protrusions and depressions on the surface of the current collector. Furthermore, the electrode current collector used may have various forms, such as a film, sheet, foil, net, porous material, foam, and non-woven material.

In the embodiment of the present disclosure, the electrode may be a negative electrode.

A fifth embodiment of the present disclosure provides a lithium secondary battery including the electrode described above.

In the embodiment of the present disclosure, provided is a lithium secondary battery including a positive electrode, a negative electrode, a separator positioned between the positive and negative electrodes, and an electrolyte, in which one or more of the positive and negative electrodes is the electrode described above.

In the embodiment of the present disclosure, the separator is configured to separate the negative and positive electrodes and provide a passage for lithium ions to move. Any separators commonly used in secondary batteries may be usable without particular limitations. Specifically, as the separator, a porous polymer film, for example, a porous polymer film formed using polyolefin-based polymers, such as ethylene homopolymers, propylene homopolymers, ethylene/butene copolymers, ethylene/hexene copolymers, and ethylene/methacrylate copolymers, or a laminated structure thereof consisting of two or more layers may be used. Additionally, common porous non-woven fabrics, for example, non-woven fabrics made of polyethylene terephthalate fibers, glass fibers having high melting points, and the like, may be used. Furthermore, a coated separator containing ceramic components or polymeric materials may be used to obtain heat resistance or mechanical strength, which may be optionally used in a structure consisting of a single layer or multiple layers.

In the embodiment of the present disclosure, examples of the electrolyte may include an organic liquid electrolyte, an inorganic liquid electrolyte, a solid polymer electrolyte, a gel-type polymer electrolyte, a solid inorganic electrolyte, and a molten inorganic electrolyte, which may be usable when manufacturing lithium secondary batteries, but are not limited thereto.

**Mode for Invention**

Hereinafter, the present disclosure will be described in more detail through examples.

**<Example 1>**

Single-walled carbon nanotube (TUBALL 01RW03, prepared by OCSiAl, specific surface area: 1,160 m$^2$/g) having a purity of 99%, carboxymethyl cellulose {degree of substitution (DS): 0.87, Product number: 419273, prepared by Sigma Aldrich, weight average molecular weight: 90,000} as a cellulose-based dispersant, and water as a solvent were mixed to prepare 1 kg of a mixture, which was then mixed using a high-shear force in-line mixer (manufactured by IM001 K&S) and subjected to high-pressure treatment using a high-pressure homogenizer to prepare a carbon nanotube dispersion liquid. In this case, the single-walled carbon nanotubes had a D10 of 0.88 um, a D50 of 4.72 um, and a D90 of 18.5 um.

In this case, the carboxymethyl cellulose had a value of 9.67 calculated by Mathematical Formula 1.

Degree of substitution (DS) of cellulose-based dispersant/ (weight average molecular weight of cellulose- based dispersant) * 10$^6$     [Methematical Formula 1]

**<Comparative Example 1>**

A carbon nanotube dispersion liquid was prepared in the same manner as in Example 1, except for using single-walled carbon nanotubes (TUBALL 01RW02, prepared by OCSiAl) having a purity of 80% instead of the single-walled carbon nanotubes having a purity of 99%.

**<Comparative Example 2>**

A carbon nanotube dispersion liquid was prepared in the same manner as in Example 1, except for using single-walled carbon nanotubes (TUBALL 01RW01, prepared by OCSiAl) having a purity of 75% instead of the single-walled carbon nanotubes having a purity of 99%.

**<Comparative Example 3>**

A carbon nanotube dispersion liquid was prepared in the same manner as in Example 1, except for using single-walled carbon nanotubes having particle size characteristics as in Table 1 below and using polyvinylpyrrolidone and tannic acid as the dispersant instead of carboxymethyl cellulose.

**<Comparative Example 4>**

A carbon nanotube dispersion liquid was prepared in the same manner as in Example 1, except for using polyvinylpyrrolidone and HP20 (Sokalan HP20, prepared by BASF) as the dispersant instead of carboxymethyl cellulose.

**<Comparative Example 5>**

A carbon nanotube dispersion liquid was prepared in the same manner as in Example 1, except for using polyvinylpyrrolidone alone as the dispersant instead of carboxymethyl cellulose.

**<Comparative Example 6>**

A carbon nanotube dispersion liquid was prepared in the same manner as in Example 1, except for using carboxymethyl cellulose {degree of substitution (DS): 1.2, weight average molecular weight: 90,000} instead of carboxymethyl cellulose used in Example 1. In this case, the carboxymethyl cellulose used herein had a value of 13.33 calculated by Mathematical Formula 1.

**<Comparative Example 7>**

A carbon nanotube dispersion liquid was prepared in the same manner as in Example 1, except for using carboxymethyl cellulose {degree of substitution (DS): 0.6, Catalog number: 332601000, prepared by Thermo Scientific, weight average molecular weight: 90,000} instead of carboxymethyl cellulose used in Example 1. In this case, the carboxymethyl cellulose used herein had a value of 6.67 calculated by Mathematical Formula 1.

**<Comparative Example 8>**

A carbon nanotube dispersion liquid was prepared in the same manner as in Example 1, except for using carboxymethyl cellulose {degree of substitution (DS): 0.87, Product number: 419303, prepared by Sigma-Aldrich, weight average molecular weight: 250,000} instead of carboxymethyl cellulose used in Example 1. In this case, the carboxymethyl cellulose used herein had a value of 3.48 calculated by Mathematical Formula 1.

**<Evaluation of physical properties>**

**Measurement of purity of single-walled carbon nanotubes**

Purity was measured and calculated by the method of the calculation equation below.

Purity = 100 * (Mass of test container and ash - Mass of test container)/ (Mass of test container and dried sample - Mass of test container)      [Calculation Equation ]

Specifically, the amount of impurities capable of being incorporated during an electrode manufacturing process was analyzed using an electric furnace. The sample was dried according to a method, the test procedure KS L 3412, and cooled to room temperature in a desiccator.

With the use of a scale, the mass of dried test container A was measured to the nearest $\pm$ 0.002 g, and 25 to 50 g of sample B was placed into a crucible to measure the mass once the sample in the desiccator cooled to room temperature. The mass of the sample and the test container was re-measured to the nearest $\pm$ 0.002 g.

The test container containing the sample was positioned in the electric furnace, followed by injecting air thereinto at a slow rate, and the furnace was operated so that the sample reached a temperature of 500°C within 1 hour or 750°C within 2 hours.

The sample was periodically mixed to help oxidize the sample. When completely ashed (the black stain disappeared), the electric furnace was heated to a temperature of up to 950°C, and the same temperature was maintained for 1 hour. The test container containing the ash was taken out of the electric furnace and cooled to room temperature in the desiccator, followed by measuring the mass of the test container containing the ash. The sample was placed back into the electric furnace at a temperature of 950°C and heated for 30 minutes, followed by measuring mass C to the nearest $\pm$ 0.002 g.

**Measurement of degree of substitution of cellulose-based dispersant**

Into 250 ml of a beaker, 4 g of the cellulose-based dispersant sample used in the example and comparative examples, 75 ml of a 95% ethanol solution, and phenolphthalein (1% ethanol solution) were introduced and stirred while adding a standard sodium hydroxide solution (0.4 mol/L) .

Then, the resulting product was stirred using a magnetic heating stirrer and titrated using a standard hydrochloric acid solution (0.4 mol/L) .

The titration was completed when the color turned from dark red to transparent.

The degree of substitution of the cellulose-based dispersant was calculated using Equation 1 below.

$$[Equation\ 1]$$
$$DS = (0.162 * A)/(1 - 0.058 * A)$$

The A is the number of millimoles (mmol/g) of sodium hydroxide used to neutralize 1 g of the cellulose-based dispersant, and the unit of the coefficients, 0.162 and 0.058, of A is g/mmol.

The A was calculated using Equation 2 below.

[Equation 2]

$$A = (B * C - D * E)/F$$

In Equation 2,

B is the volume (mL) of the sodium hydroxide standard solution added,
C is the concentration (mol/L) of the sodium hydroxide standard solution added,
D is the volume (mL) of the hydrochloric acid standard solution used during the titration,
E is the concentration (mol/L) of the hydrochloric acid standard solution used during the titration, and
F is the weight (g) of the cellulose-based dispersant sample.

**Measurement of weight average molecular weight of cellulose-based dispersant**

Measurement was performed by gel permeation chromatography (GPC) using the following: a detector: RI-detector; a column: Agilent PL aquagel-OH30 8 um; an eluent: 0.2 M NaNO3 + 0.01 M NaH2PO4 (pH 7); and a standard material: PEF/PEO.

**Measurement method of particle size of single-walled carbon nanotubes**

A laser diffraction method was used, and a laser diffraction particle size measuring device (Malvern Mastersizer3000) available at this time was used. The median particle size (D50) based on 50% of the particle size distribution was calculated using the measuring device. On the other hand, D10 and D90 mean the particle sizes corresponding to 10% and 90% of the particle size distribution, respectively.

**Measurement method of viscosity of dispersion liquid**

A DVNext CP rheometer manufactured by Brookfield was used, and the measurement was performed at a temperature of 25°C and a shear rate of 15 sec$^{-1}$.

**Measurement of initial cell efficiency**

A coin cell was manufactured as follows.
An electrode slurry was prepared by mixing an electrode active material (including silicon microparticles and graphite in a 7:93 weight ratio) with water in each of the carbon nanotube dispersion liquids of the example and comparative examples and then mixing the resulting product for 30 minutes using a ball-milling method.
The electrode slurry was applied onto a Cu foil current collector and dried for 4 hours at a temperature of 60°C under vacuum conditions.
The dried electrode was punched to a diameter of 11 mm, and Li metal was used as the counter electrode, thereby manufacturing a coin half-cell. In this case, Celgard 2450 was used as a separator, and a composition of LiPF6 (1.3 M) in ethylene carbonate (EC): diethylene carbonate (DEC) in a 30:70 volume ratio with 10 wt% of fluoroethylene carbonate (FEC) was prepared and injected as an electrolyte.
The initial charge and discharge characteristics of the coin cell were evaluated under the following conditions: 0.1 A/g, room temperature, and a voltage level in a range of 0.01 to 1.5 V.

**Measurement of high-rate retention capacity of cell**

The final charge and discharge characteristics of each coin cell manufactured above were evaluated at 2 A/g and 4 A/g.

[Table 1]

| Classification | Example 1 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| SWCNT purity | 99% | 80% | 75% | 99% | 99% | 99% | 99% | 99% | 99% |
| Degree of substitution of cellulose-based dispersant | 0.87 | 0.87 | 0.87 | Not included | Not included | Not included | 1.2 | 0.6 | 0.87 |
| Weight average molecular weight of cellulose-based dispersant | 90,000 | 90,000 | 90,000 | Not included | Not included | Not included | 90,000 | 90,000 | 250,000 |
| Mathematical Formula 1 | 9.67 | 9.67 | 9.67 | - | - | - | 13.33 | 6.67 | 3.48 |
| D10 (um) | 0.88 | 0.89 | 0.89 | 0.45 | 0.88 | 0.88 | 1.51 | 2.22 | 2.05 |
| D50 (um) | 4.72 | 4.73 | 4.74 | 1.59 | 4.72 | 4.72 | 5.1 | 8.11 | 22 |
| D90 (um) | 18.5 | 21.75 | 23.74 | 9.74 | 18.5 | 18.5 | 30 | 32.1 | 90.3 |
| Viscosity (cPs) | 1,411 | 4,500 | 7,196 | 79.8 | More than 15,000 | More than 15,000 | 4,060 | 5,044 | More than 15,000 |
| Initial efficiency (%) | 78.5 | 71.4 | 70.6 | 71.5 | 71.1 | 63.4 | 72.5 | 72.3 | 72 |
| High-rate retention capacity (mAh/g, at 2 A/g) | 300 | 100 | 100 | 100 | 80 | Not measurable | 150 | 140 | 110 |
| High-rate retention capacity (mAh/g, at 4 A/g) | 200 | 50 | 50 | 60 | 40 | Not measurable | 90 | 80 | 60 |

From the above results, it was confirmed that the carbon nanotube dispersion liquid, including the single-walled carbon nanotubes having a purity of 99% and the cellulose-based dispersant having a value of 7 or more and 13 or less calculated by Mathematical Formula 1, exhibited low viscosity and had high initial efficiency and high-rate retention capacity (Example 1). On the other hand, it was confirmed that when the single-walled carbon nanotubes had a purity of less than 95%, the viscosity was high, and the initial efficiency and high-rate retention capacity were low (Comparative Examples 1 and 2). Additionally, even when the single-walled carbon nanotubes had a purity of 95% or more, it was confirmed that the initial efficiency and high-rate retention capacity were low when not involving the cellulose-based dispersant (Comparative Examples 3 to 5).

On the other hand, even when the single-walled carbon nanotubes had a purity of 95% or more, it was confirmed that the initial efficiency and high-rate retention capacity were low when the value calculated by Mathematical Formula 1 was less than 7 (Comparative Examples 7 and 8), or when the value calculated by Mathematical Formula 1 exceeded 13 (Comparative Example 6).

**Claims**

1. A carbon nanotube dispersion liquid comprising:

   single-walled carbon nanotubes (SWCNTs) having a purity of 95% or more; and
   a cellulose-based dispersant, wherein the cellulose-based dispersant has a value of 7 or more and 13 or less calculated by Mathematical Formula 1.

   Degree of substitution (DS) of cellulose-based dispersant/ (weight average molecular weight of cellulose-based dispersant) $* 10^6$

2. The dispersion liquid of claim 1, wherein the degree of substitution of the cellulose-based dispersant is 0.3 or more and 2 or less.

3. The dispersion liquid of claim 1, wherein the cellulose-based dispersant has a weight average molecular weight in a range of 30,000 to 1,000,000.

4. The dispersion liquid of claim 1, wherein the cellulose-based dispersant is methyl cellulose, ethyl cellulose, hydroxyethyl cellulose, benzyl cellulose, trityl cellulose, cyanoethyl cellulose, carboxymethyl cellulose (CMC), carboxyethyl cellulose, aminoethyl cellulose, nitrocellulose, cellulose ether, a carboxymethyl cellulose sodium (CMCNa) salt, or a combination thereof.

5. The dispersion liquid of claim 1, wherein the single-walled carbon nanotubes have a specific surface area (BET) of 750 m$^2$/g or larger.

6. The dispersion liquid of claim 1, wherein the single-walled carbon nanotubes are comprised in an amount in a range of 0.1 to 5 wt% based on the total weight of the dispersion liquid.

7. The dispersion liquid of claim 1, wherein the single-walled carbon nanotubes have an average particle size (D50) of 0.1 um or larger and 10 um or smaller.

8. The dispersion liquid of claim 1, wherein the dispersion liquid comprises an aqueous solvent.

9. The dispersion liquid of claim 1, wherein the single-walled carbon nanotubes have an average particle size (D10) of 0.1 um or larger and 10 um or smaller.

10. The dispersion liquid of claim 1, wherein the dispersion liquid has a viscosity of 10,000 cPs or less at a temperature of 25°C and a shear rate of 15 sec$^{-1}$.

11. A method of preparing the dispersion liquid of any one of claims 1 to 10, the method comprising mixing a cellulose-based dispersant and single-walled carbon nanotubes (SWCNTs) having a purity of 95% or more.

**12.** The method of claim 11, wherein the method comprises dispersing the single-walled carbon nanotubes (SWCNTs) having a purity of 95% or more.

**13.** An electrode slurry composition comprising:

the dispersion liquid of any one of claims 1 to 10;
an electrode active material; and
a binder.

**14.** An electrode comprising an electrode active material layer formed by the electrode slurry composition of claim 13.

**15.** The electrode of claim 14, wherein the electrode is a negative electrode.

**16.** A lithium secondary battery comprising the electrode of claim 15.

## INTERNATIONAL SEARCH REPORT

| International application No. |
|---|
| **PCT/KR2022/020101** |

**A. CLASSIFICATION OF SUBJECT MATTER**

**C01B 32/174**(2017.01)i; **C01B 32/159**(2017.01)i; **H01M 4/62**(2006.01)i

According to International Patent Classification (IPC) or to both national classification and IPC

**B. FIELDS SEARCHED**

Minimum documentation searched (classification system followed by classification symbols)

C01B 32/174(2017.01); B01F 17/52(2006.01); C01B 31/02(2006.01); C07D 251/52(2006.01); H01B 1/22(2006.01); H01B 1/24(2006.01); H01M 10/052(2010.01); H01M 4/131(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브 (carbon nanotube), 전극 (electrode), 슬러리 (slurry), 분산제 (dispersant), 셀룰로오스 (cellulose)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0015714 A (LG CHEM, LTD.) 10 February 2021 (2021-02-10)<br>See claims 1, 4-5, 8-9 and 14-16. | 1-16 |
| A | KR 10-2018-0080464 A (KOREA ELECTROTECHNOLOGY RESEARCH INSTITUTE) 12 July 2018 (2018-07-12)<br>See entire document. | 1-16 |
| A | KR 10-2010-0114399 A (KOREA INSTITUTE OF SCIENCE AND TECHNOLOGY) 25 October 2010 (2010-10-25)<br>See entire document. | 1-16 |
| A | JP 2012-214320 A (CCI CORP.) 08 November 2012 (2012-11-08)<br>See entire document. | 1-16 |
| A | JP 2020-011934 A (TOYO INK SC HOLDINGS CO., LTD. et al.) 23 January 2020 (2020-01-23)<br>See entire document. | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 March 2023** | **16 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020101**

| Patent document cited in search report | | | Publication date (day/month/year) | Patent family member(s) | | | Publication date (day/month/year) |
|---|---|---|---|---|---|---|---|
| KR | 10-2021-0015714 | A | 10 February 2021 | CN | 113906587 | A | 07 January 2022 |
| | | | | EP | 3965182 | A1 | 09 March 2022 |
| | | | | EP | 3965182 | A4 | 14 September 2022 |
| | | | | US | 2022-0238886 | A1 | 28 July 2022 |
| | | | | WO | 2021-020939 | A1 | 04 February 2021 |
| KR | 10-2018-0080464 | A | 12 July 2018 | None | | | |
| KR | 10-2010-0114399 | A | 25 October 2010 | CN | 101866722 | A | 20 October 2010 |
| | | | | CN | 101866722 | B | 27 June 2012 |
| | | | | JP | 2010-251293 | A | 04 November 2010 |
| | | | | KR | 10-1091744 | B1 | 08 December 2011 |
| | | | | US | 2010-0266838 | A1 | 21 October 2010 |
| JP | 2012-214320 | A | 08 November 2012 | JP | 5759770 | B2 | 05 August 2015 |
| JP | 2020-011934 | A | 23 January 2020 | JP | 6524479 | B1 | 05 June 2019 |
| | | | | WO | 2020-017656 | A1 | 23 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210185214
- KR 1020220171427

- JP 2010251293 A